# EUROPEAN PATENT APPLICATION

(11) **EP 4 431 904 A1**
(43) Date of publication of application: **18.09.2024**
(21) Application number: 23161933.9
(22) Date of filing: 14.03.2023
(51) Int. Cl.: G01N 3/04

(54) **GUIDE FOR COMPRESSION TEST**

(71) Applicant: Illinois Tool Works Inc., Glenview IL 60025 (US); Politecnico Di Torino, 10129 Torino (IT)
(72) Inventor: VIGNA, Lorenzo, Torino (IT); PAOLINO, Davide Salvatore, Torino (IT); BELINGARDI, Giovanni, Torino (IT)
(74) Representative: HGF

(57) **Abstract**

Guide for a compression test, more specifically a drop tower compression test. The guide includes: a support plate (208a, 208b) on each side of the test sample and a support member having at least a first portion positionable between the first loading plate and the opposing load and extending substantially parallel to the loading direction to constrain the test sample in a direction perpendicular to the loading direction. At least one support plate has a support member operably mounted thereto so that, in use, the first portion (204a, 206a) contacts the test sample in a first position relative to its support plate. The guide is configured so that, in use, when the opposing load is applied to the test sample, each first portion moves in the loading direction away from the first position.

## Description

The invention relates to a guide. In particular, the invention relates to a guide for a compression test, more specifically a drop tower compression test.

### INTRODUCTION

Edgewise compression testing applies a load to a test sample, urging the test sample towards a loading plate. Edgewise compression test samples are prone to buckling, and so test fixtures commonly have guides to inhibit buckling. However, in order to provide a stroke length for the compression test, an unsupported length of the test sample must be provided. Clearly, the unsupported length is prone to buckling and so the length thereof is limited by the geometry of the test sample, thereby limiting the size of test sample available.

In order to overcome this problem, it is known to use support bars extending over the length of the test sample, such that the support bars are received within holes in a loading plate.

In certain examples, support members may be fixed to a support plate and adjustably positioned to provide a predetermined gap or space to accommodate deformation of the test sample. However, the position of each support member relative to the loading plate is fixed during testing so that the support member remains static as the test sample moves towards the loading plate under the applied force. Friction is created between support member and the test sample which distorts the test sample and affects test results.

It is an object of the present invention to overcome these limitations.

### SUMMARY OF THE INVENTION

The invention is set out in the appended claims.

In one aspect, a guide is provided for a compression test apparatus having a test sample between a first loading plate and an opposing load applied in a loading direction towards the first loading plate from the test sample, the guide includes:
a support plate on each side of the test sample,
a support member having at least a first portion positionable between the first loading plate and the opposing load and extending substantially parallel to the loading direction to constrain the test sample in a direction perpendicular to the loading direction,
where at least one support plate has a support member operably mounted thereto so that, in use, the first portion contacts the test sample in a first position relative to its support plate, and
where, the guide is configured so that, in use, when the opposing load is applied to the test sample, each first portion moves in the loading direction away from the first position.

Suitably, each support plate may have a support member operably mounted thereto so that, in use, each first portion contacts a portion of the test sample in a location relative to its respective support plate.

Suitably, the first portion may be in contact with an engagement portion of the test sample when the support member constrains the test sample so that, in use, the first portion remains substantially in contact with the engagement portion when moving away from the first position.

Suitably, the support member may have a second portion configured so that, in use, the second portion is compressed as the first portion moves away from the first position.

Suitably, the second portion may include a biasing member, typically a spring, configured to bias the at least one support member towards the first position. More suitably, the biasing member is configured to bias the first portion of each support member towards the first position.

Suitably, the at least one support member may have a third portion positioned to define a space between the first loading plate and the third portion such that when the opposing load is applied the test sample is deformable in a direction perpendicular to the loading direction within the space.

Suitably, at least the first portion of each support member may have a flat engagement surface to contact the engagement portion of the test sample. That is, the flat engagement surface contacts a surface on a major surface of the test sample.

Suitably, each support plate may have one, or more than one, of each portion of a support member. That is, a support plate may include one, or more than one first portion of a support member. A support plate may include one, or more than one second portion of a support member. A support plate may include one, or more than one third portion of a support member. The number of first portions, second portions and third portions may be independent of each other.

Suitably, the support plates on each side of the test sample may be pivotably connected.

Suitably, a first support plate disposed on one side of the test sample may be configured to cooperatingly engage with a second support plate on the other side of the test sample. The spacing between a first support plate and a second support plate may be adjusted, for example by movably mounting the second support plate to a frame member.

Suitably, a guide may also include a frame member including an actuator configured to selectively move the second support plate relative to the frame member and thereby, in the constraining position, constrain the test sample with a predetermined clamping force. In this way, the spacing between a first support plate and a second support plate is adjustable to accommodate test samples with different thicknesses.

Suitably, the actuator may limit the clamping force to a force in a range from 0.1kN to 10kN, more suitably 0.5kN to 2kN, and even more suitably in a range from 0.8kN to 1.2kN. Suitably, the actuator may limit the clamping force to 0.1kN, 0.2kN, 0.5kN, 1kN, 2kN, 5kN or 10kN.

Suitably, the actuator may torque limiting means. The torque limiting means limit the torque that may be applied by the actuator to move the second support member relative to the frame member. Suitably, the torque limiting means may limit the torque in a range from 0.2Nm to 20Nm, more suitably in a range from 1Nm to 4Nm. Suitably, the actuator may limit the clamping force to 0.2Nm, 0.4Nm, 1Nm, 2Nm, 4Nm, 10Nm, or 20Nm.

In one aspect, a guide is provided for a compression test apparatus having a test sample between a first loading plate and an opposing load applied in a loading direction towards the first loading plate from the test sample, the guide includes:
a first support plate and a second support plate disposed, in use, on each side of the test sample,
a support member having at least a first portion positionable between the first loading plate and the opposing load and extending substantially parallel to the loading direction to constrain the test sample in a direction perpendicular to the loading direction,
where each of the first support plate and the second support plate has at least one support member operably mounted thereto, and
where the first support plate is configured to be selectively pivotable relative to the second support plate.

Suitably, the first support plate may be configured to be pivotable between a first, sample constraining position and a second, sample loading position.

Suitably, the first support plate may be configured to be hinged relative to the second support plate so as to pivot around an axis extending in a direction parallel to the loading direction.

Suitably, the second support plate may be mounted to a frame member and configured to be selectively moveable relative to the frame member in a direction perpendicular to the loading direction.

Suitably, a support member may be formed of a metal, for example a steel or a bronze. More suitably, the support member may include a coating, for example a polymer coating such as PTFE, or a metal coating, such as nickel. The coating may be a mixture of a polymer and a metal, for example a mixture of PTFE and nickel.

The test sample may be a fibre reinforce polymer (FRP) test sample. The test sample may be a carbon fibre reinforced polymer (CFRP) test sample. The test sample may be a glass fibre reinforced polymer (GFRP) test sample. The test sample may also be made from a material that includes any one of plastics or such polymers, metals and woods.

The load applied to the test sample may be provided by an impactor member.

The first loading plate may be a lower loading plate relative to the impactor member, during use.

The impactor member may comprise a substantially planar-shaped impactor head portion having a contact surface configured to engage with the test sample. For example, the impactor head portion may be substantially disc-shaped, but any other planar shape is envisaged. Preferably, the substantially spherically shaped contact surface may have a predetermined radius adapted to provide an optimised gradual distribution of the load energy into the test sample, during use.

At least one support member may be disposed on each side of the test sample. For example, for a planar test sample, at least one support member may be provided on each of the major sides of the test sample.

The guide may further comprise a support plate on each side of the test sample, wherein each support plate may have at least one support member operably connected thereto.

Each supplemental support member may be selectively moveably connected to the respective support plate prior to testing, so as to allow sliding movement in the loading direction of any of the at least one support member relative to respective one of the support plate. Accordingly, the support member(s) can be moved to adjust a size of the space.

The guide may be disposed upon a table. The table may be disposed upon a pillar. The pillar may comprise handles for manoeuvring the table and the guide into a test configuration.

The at least one support plate may comprise a passage along an edge corresponding to the space between the first loading plate and the support member. The passage may be greater than the width of the test sample. The at least one support plate may rest upon the first loading plate on either side of the passage. The at least one support plate may be supported by brackets along each edge which is parallel to the loading direction. The brackets may rest upon the table. The brackets may be connected to an adjustment device, for adjusting the respective support plate and support members connected thereto, in the direction perpendicular to the loading direction.

The distance between the at least one support plate and a second loading plate may define the stroke length of the compression test.

The guide may be used in a dynamic compression test. The guide may be used in a drop tower compression test. An impactor of a drop tower test machine may impact, in use, a second (upper) plate.

The guide may be used in a quasi-static compression test. The guide may be used in a compression test.

The guide may be used in a cyclic loading test (e.g. a fatigue test).

Other technical features may be readily apparent to one skilled in the art from the following figures, descriptions, and claims.

It will understood that one or more features described in conjunction with the one aspect, example or embodiment optionally may be applicable to any with one or more features of another aspect, example of embodiment. In particular, aspects including features of a first portion of the support member that moves in the loading direction during use optionally may be provided with certain features of an aspect of the pivotable support plate. And aspects including features of the pivotable support plate optionally may be provided with certain features of an aspect of a first portion of the support member that moves in the loading direction.

Certain examples reduce the risk of damaging test samples constrained with support members. In particular, a clamping force applied to the surface of test sample may be moderated or limited. In particular, certain examples ensure no energy has been dissipated due to localised friction or damage of the test sample by the support members. By moving with test sample material as it moves towards the first loading plate the crashworthiness of the test sample is determinable.

Certain examples allow easy loading and unloading of a test sample within a guide. Cleaning of debris from a guide is also simplified as the components of the guide between the support plates are readily accessible.

Furthermore, the provision of support members extending across the unsupported section of the test sample allows for the testing of large samples such that results are not affected by localised material characteristics.

Certain examples provide a constant space between the first loading plate and a portion of the support member making the guide particularly beneficial for the crashworthiness testing of FRP test samples (for example CFRP) for use in automotive or aerospace applications. In these applications the crashworthiness, which is the ability of a structure to protect the occupants in survivable crashes, is linked to the edgewise compressive strength of the FRP material. Therefore, by allowing the test sample to splay substantially freely, the crashworthiness is more accurately predictable.

Certain examples allow testing of the test samples that are 150 mm tall and 100 mm wide or 150 mm tall and 50 mm wide, each of which is sufficiently large to improve predictions of crashworthiness by reducing localised effects in the FRP materials.

### BRIEF DESCRIPTION OF THE DRAWINGS

Examples of the invention are now described, by way of example only, hereinafter with reference to the accompanying drawings, in which:
FIG. 1A shows a front view of a known guide;
FIG. 1B shows a perspective view of support members of the guide of FIG. 1A;
FIG. 1C shows support plates of the guide of FIG. 1A;
FIG. 1D shows the guide of FIG. 1A mounted to a stand;
FIG. 1E shows a glass fibre reinforced polymer test sample which has been subjected to a compression test using a guide of FIG. 1A;
FIG. 2A shows a perspective view of an example guide in a first position;
FIG. 2B shows guide of FIG. 2A in a second position;
FIG. 2C shows a cross-sectional view of the guide of FIG. 2A in the first position; and
FIG. 2D shows a rear perspective view of the guide of FIG. 2A in the second position.

In the drawings, like reference numerals refer to like parts.

### DETAILED DESCRIPTION

Certain terminology is used in the following description for convenience only and is not limiting. The words 'right', 'left', 'lower', 'upper', 'front', 'rear', 'upward', 'down' and 'downward' designate directions in the drawings to which reference is made and are with respect to the described component when assembled and mounted. The words `inner', `inwardly' and 'outer', 'outwardly' refer to directions toward and away from, respectively, a designated centreline or a geometric centre of an element being described (e.g. central axis), the particular meaning being readily apparent from the context of the description.

Further, as used herein, the terms 'connected', 'attached', 'coupled', 'mounted' are intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the use of ordinal adjectives, such as, "first", "second", "third" etc. merely indicate that different instances of like objects are being referred to and are not intended to imply that the objects so described must be in a given sequence, either temporally, spatially, in ranking or in any other manner.

The illustrated examples relate to a guide for a compression test. The guide includes support members and a space at the bottom to allow the test sample to deform in a direction perpendicular to the loading direction.

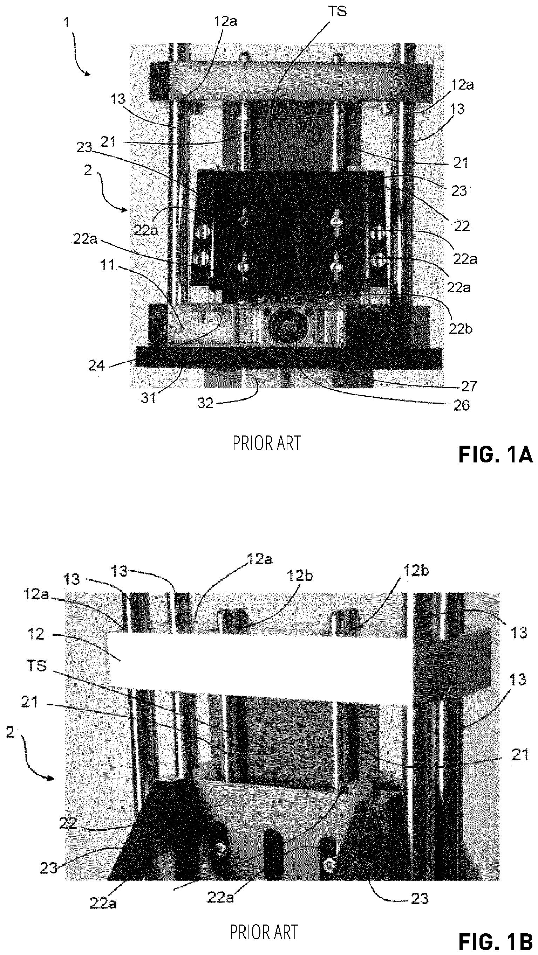

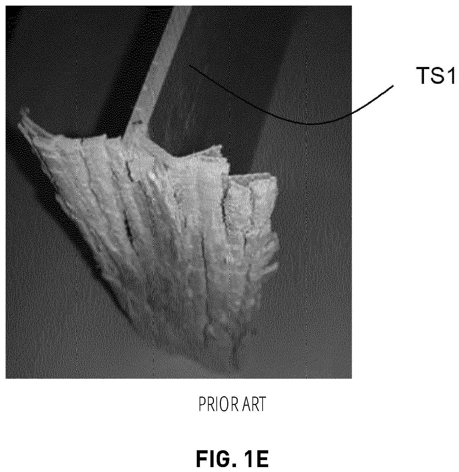

The guide may be used in dynamic edgewise compression testing, for example in a drop tower edgewise compression test. The prior art example of a guide illustrated in Figures 1A to 1D is for use in a drop tower, and the test sample TS in Figure 1E has been tested using a drop tower. However, the skilled person will appreciate that the guide can be used in other compression tests, such as high speed dynamic, quasi-static, creep and cyclic compression tests. Furthermore, the example test sample shown in Figures 1A to 1D is a carbon fibre reinforced polymer (CFRP) test sample, and the test sample illustrated in Figure 1E is a glass fibre specimen. However, the skilled person will appreciate that other test samples can be tested using the guide.

Referring now to Figure 1A, a known test fixture 1 for use in a drop tower, for edgewise compression testing a flat, planar test sample TS, is illustrated. In this embodiment the test sample TS is 150 mm tall and 100 mm wide, but it will be appreciated that any size of test sample can be used, and the test sample TS is not limited to a flat, planar test sample TS as illustrated.

The test fixture 1 comprises a bottom or first loading plate, or platen, 11 and a top or second loading plate or platen 12. A test sample TS is located in an edgewise configuration, between the first loading plate 11 and second loading plate 12. In use, the second loading plate 12 moves towards the first loading plate 11 to apply a compressive load to the test sample. Movement of the second loading plate 12 is via an impactor of a drop tower machine impacting the top of the second loading plate 12. It is understood by the skilled person in the art that movement and force may be provided by any other suitable test machine, e.g. a quasi-static or high-speed compression machine.

Alignment of the second loading plate 12 is maintained by four guide bars 13. Each guide bar 13 is received in a respective through-hole 12a in the second loading plate 12.

Referring now to Figure 1B, a guide 2 is positioned between the first loading plate 11 and second loading plate 12 to inhibit global buckling of the test sample TS during compression testing. The guide 2 comprises four support members 21. In this embodiment, the support members 21 are circular rods, but other configurations are envisaged, such as knife edges. Two support members 21 are located on either side of the test sample TS, orientated to be parallel with the loading direction. The horizontal proximity of the support members 21 to the surface of the test sample TS is dependent upon the test configuration. The support members 21 may be spaced from or in contact with the test sample TS.

The support members 21 are received in slots 12b in the second loading plate 12. The slots 12b provide clearance around the support members 21, such that the support members 21 do not inhibit movement of the second loading plate 12.

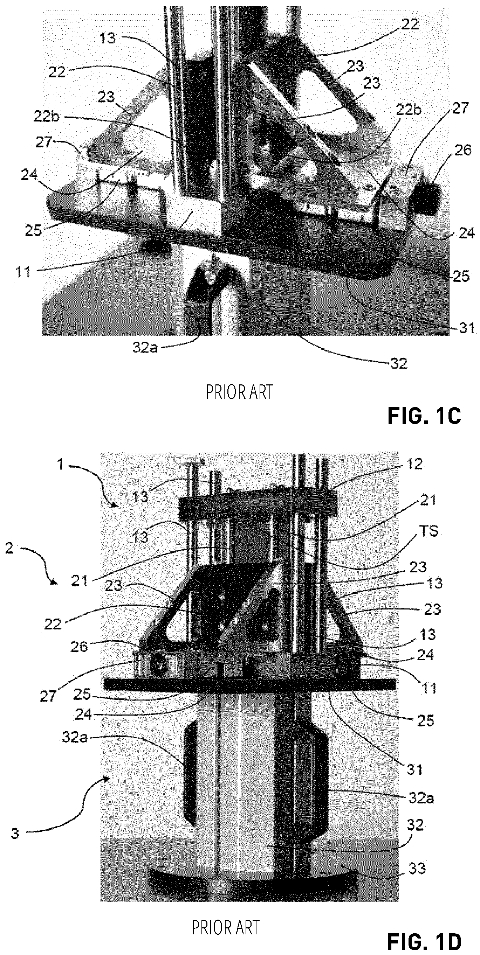

Referring now to Figure 1C, two support plates 22 are provided between the first and second loading plates 11, 12, and are disposed parallel to the test sample TS. The support plates 22 rest upon the first loading plate 11. Each support plate 22 has a passage 22b along the centre of the bottom edge. Each passage 22b is wider than the test sample TS. The height of each passage 22b is such that, upon gross deformation of the test sample TS during a compression test, a part of the test sample TS may deform through one of or both passages 22b.

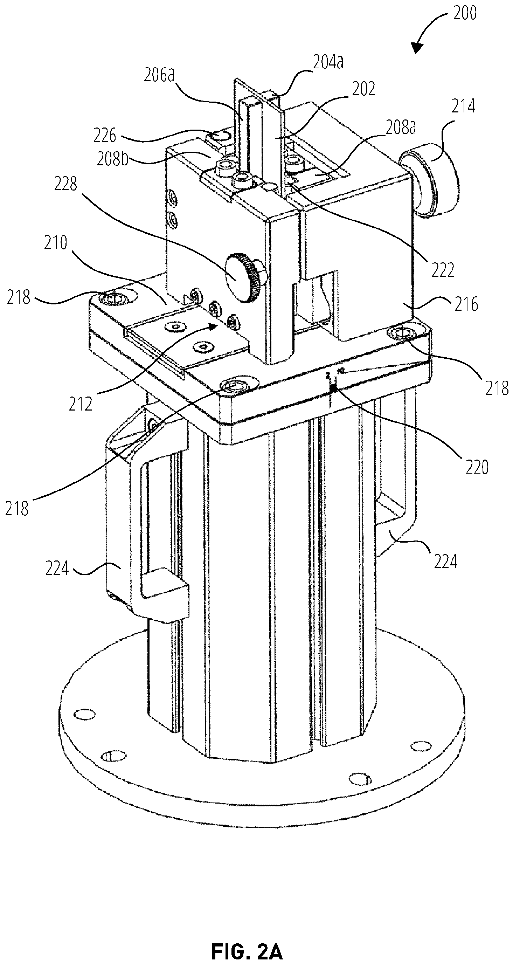

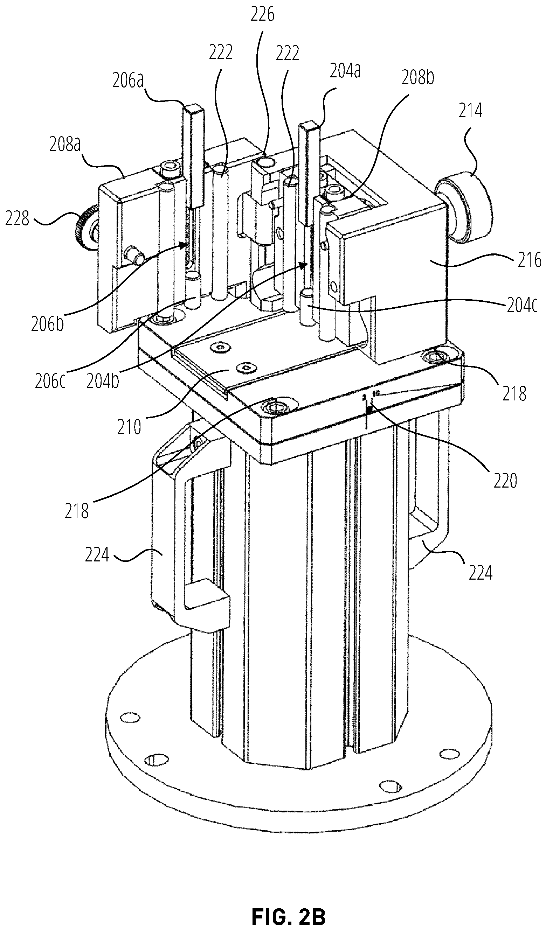

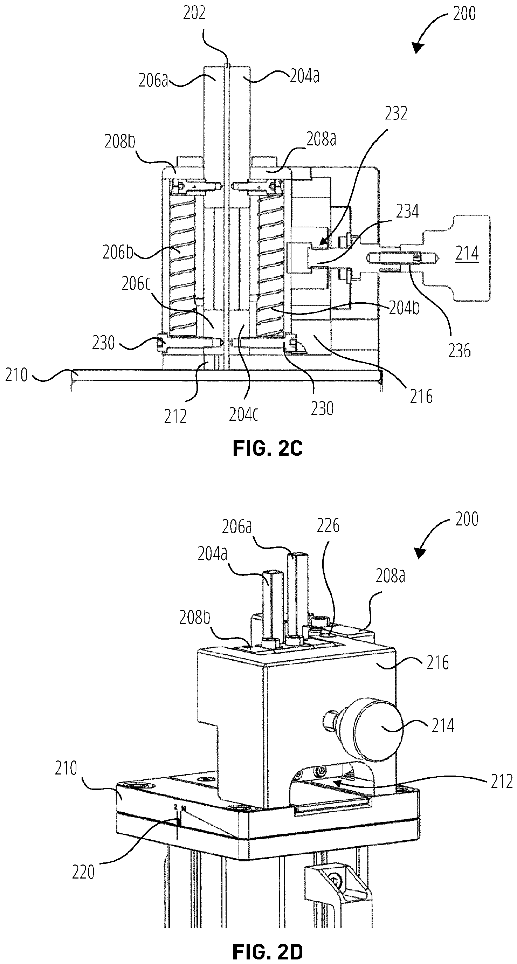

Two support members 21 are connected to each support plate 22 via bolts. The bolts are received in elongated slots 22a in the support plate 22 (as best illustrated in Figures 1 and 2). The bolts are located in slots 22a to allow the position of the support members 21 to be adjustable in the loading direction. The support members 21 are positioned so as to define a space between the first loading plate 11 and the respective support member 21. The size of the space is adjustable by adjusting the position of the support members 21 along the loading direction. The height of the space may be less than, equal to or greater than the height of the passage 22b. The space means that, upon gross deformation of the test sample TS during a compression test, a part of the test sample TS may deform through one of or both spaces.

Each support plate 22 is supported along the edges which are parallel to the loading direction, by brackets 23. Each bracket 23 has a vertical member which is connected to the respective support plate 22, and a horizontal member which extends in a direction perpendicular to the loading direction and away from the test sample TS.

The guide also comprises two mounting plates 24 disposed on either side of the test sample TS. The horizontal members of two of the brackets 23 are connected to opposing edges of each mounting plate 24, such that the mounting plates 24 are disposed perpendicular to the loading direction.

Each mounting plate 24 is mounted to a sliding block 25. Each sliding block 25 is moveable towards and away from the first loading plate 11. Moving the sliding blocks 25 moves the support members 21 in the direction perpendicular to the test sample TS to accommodate various thickness of test sample TS.

Each sliding block 25 is moved via rotation of a bolt 26. Each bolt 26 is in threaded engagement with the respective sliding block 25 and is axially constrained by a fixed block 27. Accordingly, when each bolt 26 is rotated, the threaded engagement causes the respective sliding block 25 to translate there along.

Referring now to Figure 1D, the test fixture 1 and guide 2 are disposed on a stand 3. The stand comprises a table 31, upon which the first loading plate 11 of the test fixture 1 rests. The fixed block 27 is fixed to the table 31, and the sliding block 25 is slidable along the table 31.

The table 31 is mounted to the top of a pillar 32. The pillar 32 has handles 32a for manoeuvring the stand 3. The pillar 32 is mounted to a base 33 at the bottom. The base 33 rests upon the bottom of a drop tower machine or on the floor. The base 33 has an array of mounting holes for connecting the stand to the bottom of the drop tower machine or to the floor.

In use in a drop tower test, the stand 3 is positioned in a drop tower test machine, the test fixture 1 is disposed upon the table 31, and the fixed block 27 of the guide 2 is connected to the table 31. The test fixture 1 and guide 2 can be disposed onto the table 31, and then the test fixture 1, guide 2 and stand 3 can be positioned in the drop tower test machine simultaneously.

The test sample TS is located between the first and second loading plates 11, 12 and between the support members 21. The bolts 26 on either side of the test sample TS are rotated to move the sliding blocks 25, such that the support members 21 are moved to desired distances from the surfaces of the test sample TS. The slots 12b in the second loading plate 12 allow for the movement of the support members 21 in the direction perpendicular to the loading direction.

In performing a compression test, an impactor of the drop tower test machine impacts the second loading plate 12. This causes the second loading plate to move towards the first loading plate 11 and so to load the test sample in the loading direction. The support members 21 prevent global buckling of the test sample TS during loading.

Referring now to Figure 1E, a glassfibre reinforced polymer (CFRP) test sample TS1, which has been subjected to a drop tower test using a guide of the example shown in Figures 1A to 1D, is illustrated. The laminated material of the test sample TS1 has delaminated at the edge adjacent to the first loading plate 11 to form a splaying failure mode. Upon delamination, the test sample material has deformed, or splayed, in directions perpendicular to the loading direction. This deformed material has been able to pass, substantially uninhibited, through the space between the first loading plate 11 and the support member 21, and through the passage 22b.

By not inhibiting the passing of test sample material through the space between the first loading plate 11 and the support member 21 and through the passage 22b, no energy has been dissipated due to localised damage of the test sample TS 1 around the support members 21. Therefore, the crashworthiness of the test sample TS1 is determinable.

Furthermore, the provision of support members 21 extending across the unsupported section of the test sample TS, TS1 allows for the testing of large samples such that results are not affected by localised material characteristics.

The provision of the space between the first loading plate 11 and the support member 21 and through the passage 22b, makes the guide particularly beneficial for the crashworthiness testing of FRP test samples (for example CFRP) for use in automotive or aerospace applications. In these applications the crashworthiness, which is the ability of a structure to protect the occupants in survivable crashes, is linked to the edgewise compressive strength of the FRP material. Therefore, by allowing the test sample TS, TS1 to splay substantially freely, the crashworthiness is more accurately predictable.

Furthermore, the test samples TS, TS1 are 150 mm tall and 100 mm wide, which is sufficiently large to improve predictions of crashworthiness by reducing localised effects in the FRP materials.

Although in the prior art example four support members 21 are shown, any number of support members are envisaged. For example, a third support member might be connected to the centre of each support plate 22.

Referring now to FIG. 2A to FIG. 2D, there is shown an example guide 200 for a compression test apparatus according one or more aspects. The compression test apparatus may include a test fixture such as the test fixture described with reference to FIG. 1A to FIG. 1E to apply a compressive load to a sample held in an edgewise configuration. An opposing load may thus be applied using a second loading plate, or an impactor members of a drop tower machine impacting the top of the second loading plate.

. With particular reference to FIG. 2A, the guide 200 has a test sample 202 between a first loading plate 210 and an opposing load applied in a loading direction towards the first loading plate 210 from the test sample. The guide 200 includes a support plate 208a, 208b on each side of the test sample 202. The guide 200 aslo includes a support member having at least a first portion 204a, 206a positionable between the first loading plate 210 and the opposing load and extending substantially parallel to the loading direction to constrain the test sample in a direction perpendicular to the loading direction. The first support plate 208a has a first portion 204a of the first support member operably mounted thereto so that, in use, the first portion 204a contacts the test sample 202 in a first position relative to its first support plate 208a. The second support plate 208b has a first portion 206a of the second support member operably mounted thereto so that, in use, the first portion 206a contacts the test sample 202 also in a first position relative to its second support plate 208b. The guide 200 is configured so that, in use, when the opposing load is applied to the test sample 202, each first portion 204a, 206a moves in the loading direction away from the first position. That is, the guide 200 is configured so that, in use, when the opposing load is applied to the test sample 202, each first portion 204a, 206a moves in the loading direction away from the first position towards a second position.

Each support plate 208a, 208b has a support member operably mounted thereto so that, in use, each first portion 204a, 206a of a support member contacts a portion of the test sample 202. In this way, when the support member constrains the test sample, each first portion 204a, 206a contacts an engagement portion of the test sample. The first portion 204a of the first support member and the first portion 206a of the second support member contact engagement portions on opposing sides of the test sample 202.

Referring particularly, to FIG. 2C, Each support member has a second portion 204b, 206b configured to be compressed as the first portion moves away from the first position. Each second portion 204b, 206b incudes a biasing member, typically a spring, configured to bias the respective first portion 204a, 206a of a support member towards the first position.

Each biasing member includes a proximal end for engaging with the respective first portion 204a, 206a as it moves from the first position. The proximal end is movable with respect to the support plate 208a, 208b by a force applied to the second portion 204b, 206b due to the downward movement of the first portion 204a, 206a due to the loading force during testing. The proximal end, and thereby the second portion 204b, 206b itself, is coupled to the respective first portion 204a, 206a, in this example, by a bolt.

The biasing member also includes a distal end for mounting the support member to the respective support plate. In the example, each distal end is received into a recess provided in the support plate. The recess extends lengthwise along the support plate in a direction substantially the same as the loading direction. In this way, with the biasing member located in the recess, each second portion 204b, 206b is oriented parallel to the loading direction. Each second portion 204b, 206b is oriented to be compressed in the loading direction as the respective first portion 204a, 206a moves under the loading force.

The first portion 204a, 206a of each support member includes a flat engagement surface to contact the engagement portion of the test sample 202. Stated differently, the first portion 204a, 206a is arrange to extend parallel to the loading direction with a rectangular cross-sectional shape. The flat engagement surface provides reduces the pressure applied to the test sample 202 by the support members when loaded into the guide 200.

Each support member includes a third portion 204c, 206b positioned to define a space 212 between the first loading plate 210 and the third portion. Each third portion 204c, 206b is coupled to the respective support plate 208a, 208b by a bolt 230 and aligned in parallel with the respective first portion 204a, 206a. The third portion is selectively, movably coupled to the respective support plate prior to testing. Thus, in the example, the test sample 202 is constrained is the direction perpendicular to the loading direction by both a first portion 204a, 206a and a third portion 204c, 206b of the respective support member.

Each support plate includes supplemental support members 222 mounted thereto. The supplemental support members extend in a direction parallel to the loading direction. In the example, a pair of supplemental support members are disposed either side of the respective support member mounted to each support plate 208a, 208b. The supplemental support members 222 are coupled to the support plate using bolts and provide a static support member to inhibit buckling at the edge portions of the test sample as a load is applied.

The second support plate 208b is mounted to a frame member 216. The second support plate 208b is configured to be selectively moveable relative to the frame member 216 in a direction perpendicular to the loading direction. The second support plate 208b is thereby movable relative to the first support plate 208a to adjust the spacing therebetween for the test sample 202. In this way, the spacing between the respective first support members 204a, 206a is adjustable so that the support members can accommodate test samples with different thicknesses.

The frame member includes an actuator 214 configured to selectively move the second support plate 208b relative to the frame member. In particular, the actuator 214 is coupled to a screw portion 234 extending from the rear surface of the second support plate 208b. The screw portion 234 extends through a threaded opening 232 in the frame member 216. The screw portion 234 and threaded opening 232 are thereby matingly engaged so that rotating the actuator 214 in a first rotational direction causes the second support plate 208b to move relative to the frame member 216 and towards the first support plate 208a. Rotating the actuator 214 in an opposing, second rotational direction causes the second support plate 208b to move relative to the frame member 216 and away from the first support plate 208a.

The actuator 214 is configured to apply a predetermined clamping force to the test sample 202 loaded into the guide 200. The actuator 214 includes a torque limiting means 236 so that, with a test sample positioned in the guide for testing, the actuator rotates the screw portion 234 in the first rotational direction until the second support plate 208b applies a maximal clamping force to the test sample 202. Further rotation of the actuator in the first rotational direction activates the torque limiting means 236 so that the screw portion 234 ceases to rotate and the second support plate 208b moves no closer to the first support plate 208a.

Referring particularly to FIG. 2B and FIG. 2D, the support plates of the guide 200 are pivotably connected. That is, the second support plate 208b is mounted to the first support plate 208a to be pivotable between a first, sample constraining position and a second, sample loading position.

The first support plate 208a is pivotably connected to the second support plate 208b by hinge 226 provided in the frame member 216. The hinge 226 is configured to provide rotation of the first support plates 208a relative to the second support plate 208b about an axis extending parallel to the loading direction. In this way, by providing a guide 200 with a hinge 226, the first support plate 208a is mounted to the second support plate 208b as an openable door. This provides convenient loading and unloading of the test sample 202 in the guide 200.

To use the guide 200 a test sample 202 is first loaded into the guide 200.

Initially, a user rotates the actuator 214 to set an approximate spacing between the first support member and the second support member sufficient to accommodate the thickness of a test sample 202. Typically, the spacing will be slightly greater than the thickness of a test sample 202.

The user operates the handle 228 to unlock the first support plate 208a from the second support plate 208b. The first support plate 208a is thus movable to the sample loading position by pivoting it relative to the frame member 216.

A test sample 202 is then placed against the support member and supplemental support members 222 of the second support plate 208b and held in place as the first support plate 208a is moved to the sample constraining position. The handle 228 locks the first support plate 208a to the frame member 216.

The actuator 214 is rotated in the first rotational direction to apply a predetermined clamping force to the test sample 202, as described herein. In the example shown, the torque limiting means 236 of the actuator 214 is set to limit torque to 2 kN, providing a corresponding predetermined clamping force of 1 kN to the test sample 202.

It will be noted that the frame member 216 is adjustably mounted to the first loading plate 210. In this way, the first support plate 208a and the second support plate 208b are operably mounted to the first loading plate 210 via the frame member 216 so as to align the test sample 202 along an axis transverse to the loading direction of the applied force. A calibrated measure 220 is provided along an edge of the first loading plate 210 to ensure accurate transverse alignment relative to the applied load.

The guide 200 is used in substantially the same way as the guide 2, described with reference to FIG. 1A to FIG. 1D such that, when an opposing load is applied, the test sample 202 is deformable in a direction perpendicular to the loading direction within the space 212.

In use, the first portions 204a, 206a, of each support member remain substantially in contact with the engagement portion on the test sample 202 when moving away from the first position.

As the opposing load is applied to the test sample 202, the first portion 204a, 206a moves from the first position towards the respective third portion 204c, 206b. Thus, advantageously, the first portion 204a, 206a of the first and second support members each move with the test sample 202 without reducing the space 212 available to accommodate the test sample 202 as it deforms perpendicular to the loading direction.

When deformation of the test sample 202 is complete, each of the first portions 204a, 206a of the support members is in a second position. Each first portion 204a, 206a has moved from the first position to the second position. The first portions 204a, 206a have moved with the test sample under the applied loading force. The first portions 204a, 206a have each compressed the respective second portions 204b, 206b of the support members.

It will be appreciated by persons skilled in the art that the above embodiment(s) have been described by way of example only and not in any limitative sense, and that various alterations and modifications are possible without departing from the scope of the invention as defined by the appended claims. Various modifications to the detailed designs as described above are possible.

Suitably, the movable first portion may be adapted to be used with other suitable guides arrangements, for example guides mounted to one or more of brackets, fixed blocks, sliding blocks, mounting plates, guide bars and the like.

Suitably, an arrangement with hinged support plates may be provided with or without the movable support members as described herein, or with fixed support members as found in the prior art.

Suitably, each first portion of a support member may be configured to move towards the first loading plate to a second position. The second position may correspond to a limit of movement in the first direction. The limit may be provided in a number of ways for example: by the first portion of a support member engaging its third portion, by the first portion engaging an alternative stop member, or by reaching a maximum compression of the associated second portion of the support member. Thus, each support member may be provided with or without a respective third portion.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. A guide for a compression test apparatus having a test sample between a first loading plate and an opposing load applied in a loading direction towards the first loading plate from the test sample, the guide comprising:
a support plate on each side of the test sample;
a support member having at least a first portion positionable between the first loading plate and the opposing load and extending substantially parallel to the loading direction to constrain the test sample in a direction perpendicular to the loading direction,
wherein at least one of the support plates has one or more of the support members operably mounted thereto so that, in use, the first portion contacts the test sample in a first position relative to its support plate; and
wherein, the guide is configured so that, in use, when the opposing load is applied to the test sample, each first portion moves away from the first position in the loading direction.

2. A guide according to claim 1, wherein each support plate has a support member operably mounted thereto so that, in use, each first portion contacts a portion of the test sample in a location relative to its respective support plate.

3. A guide according to claim 1 or 2, wherein the first portion is in contact with an engagement portion of the test sample when the support member constrains the test sample, and wherein, in use, the first portion remains substantially in contact with the engagement portion when moving away from the first position.

4. A guide according to any one of claims 1 to 3, wherein the support member has a second portion configured so that, in use, the second portion is compressed as the first portion moves away from the first position.

5. A guide according to claim 4, wherein the second portion includes a biasing member, typically a spring, configured to bias the at least one support member towards the first position.

6. A guide according to any one of claims 1 to 5, wherein the at least one support member has a third portion positioned to define a space between the first loading plate and the third portion such that when the opposing load is applied the test sample is deformable in a direction perpendicular to the loading direction within the space.

7. A guide according to any one of claims 1 to 6, wherein at least the first portion of each support member has a flat engagement surface to contact the engagement portion.

8. A guide according to any one of claims 1 to 7, wherein the support plates on each side of the test sample are pivotably connected.

9. A guide for a compression test apparatus having a test sample between a first loading plate and an opposing load applied in a loading direction towards the first loading plate from the test sample , the guide comprising:
a first support plate and a second support plate disposed, in use, on each side of the test sample;
a support member having at least a first portion positionable between the first loading plate and the opposing load and extending substantially parallel to the loading direction to constrain the test sample in a direction perpendicular to the loading direction;
wherein each of the first support plate and the second support plate has at least one support member operably mounted thereto; and wherein the first support plate is configured to be selectively pivotable relative to the second support plate.

10. A guide according to claim 9 , wherein the first support plate is configured to be pivotable between a first, sample constraining position and a second, sample loading position.

11. A guide according to claim 9 or 10, wherein the first support plate is configured to be hinged relative to the second support plate so as to pivot around an axis extending in a direction parallel to the loading direction.

12. A guide according to any of any one of claims 9 to 11, wherein the second support plate is mounted to a frame member and configured to be selectively moveable relative to the frame member in a direction perpendicular to the loading direction.

13. A guide according to any of claim 12, the frame member includes an actuator configured to selectively move the second support plate relative to the frame member and thereby, in the constraining position, constrain the test sample with a predetermined clamping force.
